# EUROPÄISCHE PATENTSCHRIFT

(11) **EP 0 588 284 B1**
(45) Veröffentlichungstag und Bekanntmachung des Hinweises auf die Patenterteilung: **02.12.1998**
(21) Anmeldenummer: 93114685.6
(22) Anmeldetag: 13.09.1993
(51) Int. Cl.: C03C 3/06, C03C 1/00, H01J 61/40

(54) **Metallhalogenid-Entladungslampe**
Metal halide discharge lamp
Lampe à décharge aux halogénures métalliques

(30) Priorität: 15.09.1992 DE 4230817; 27.11.1992 DE 4240006
(43) Veröffentlichungstag der Anmeldung: 23.03.1994
(73) Patentinhaber: Patent-Treuhand-Gesellschaft für elektrische Glühlampen mbH, 81543 München (DE)
(72) Erfinder: Langer, Alfred, D-86438 Kissing (DE); Genz, Andreas, Dr., D-12167 Berlin (DE); Deisenhofer, Manfred, D-86450 Unterschöneberg/Altenmünster (DE); Kiele, Walter, D-81735 München (DE); Lewandowski, Bernd, D-82340 Feldafing (DE)

(56) Entgegenhaltungen:
- EP-A- 0 478 059
- DE-A- 1 496 072
- FR-A- 1 370 013
- US-A- 3 848 152
- JOURNAL OF THE AMERICAN CERAMIC SOCIETY Bd. 70, Nr. 2 , Februar 1987 , WESTERVILLE,OHIO,USA Seiten 72 - 77 Y.ISHII ET AL.
- GLASTECHNISCHE BERICHT Bd. 61, Nr. 8 , August 1988 , FRANKFURT,DEUTSCHLAND Seiten 218 - 222 M.LACZKA ET AL.

## Beschreibung

Die Erfindung betrifft eine Metallhalogenid-Entladungslampe gemäß dem Oberbegriff des Anspruchs 1.

Es handelt sich dabei um Lampen mit Leistungen zwischen hundert Watt und einigen Tausend Watt, wie sie als Lichtquellen für Film- und Fernsehaufnahmen erwünscht sind. Die Lampen können ein- oder zweiseitig gesockelt sein. Das Entladungsgefäß kann von einem Außenkolben umgeben sein. Diese Lampen weisen eine Wandbelastung des Entladungsgefäßes von typisch 50-100 W/cm² auf bei einer Temperatur von typisch 1000 °C. Die Belastung des Außenkolbens ist typisch etwa halb so groß.

Das Spektrum dieser Lampen hat Tageslichtcharakter: die Farbtemperatur liegt bei ca. 5000-6000 K bei sehr guten Farbwiedergabeeigenschaften (Ra >90). Es besitzt einen relativ hohen Kontinuumsanteil, dem sehr dichte Viellinienspektren von Seltenerd-Atomen überlagert sind.

Derartige Lampen sind beispielsweise aus der EP-A 476 461 und aus der EP-A 492 205 bekannt.

Ein Problem bei derartigen Lampen ist, daß sie etwa 10 % ihrer Leistung als unerwünschte UV-Strahlung abgeben. Besonders schädlich für die menschliche Haut ist die besonders kurzwellige UV-C-Strahlung (λ <280 nm), die im natürlichen Sonnenlicht keine Rolle spielt. Problematisch ist auch die UV-B-Strahlung (280nm < λ <315nm), die zu Sonnenbrand führen kann. Hingegen ist der UV-A-Anteil (315 nm < λ <380 nm) in Maßen tolerierbar. Undotiertes Quarzglas ist jedoch im oben diskutierten Wellenlängenbereich durchlässig.

Zur Abschwächung des UV-Anteils ist es bekannt, Beschichtungen aus Metalloxiden (insbesondere des Titan oder Zink) auf den Lampenkolben aufzutragen (EP-A 383 634). Bei Xenonlampen wird auch Titan- und/oder Ceroxid in einer Gesamtmenge von 10 bis 300 ppm als Dotierung des Quarzglaskolbens eingesetzt (EP-A 389 717).

Aus der EP-A 558 270 (Art. 54(3)) sind Metallhalogenidlampen bekannt, deren Kolben eine Ko-Dotierung mit Cer und Titan aufweist. Als Füllung wird eine Mischung aus Jodiden des Natrium und Scandium verwendet. Eine derartige Lampe ist nicht für ein tageslichtähnliches Spektrum mit hoher Farbtemperatur von mehr als 5000 K geeignet.

In der US-A 3 848 152 ist eine Lampe mit einem Kolben aus Quarzglas beschrieben, das eine Dotierung aus den Oxiden der Metalle Zinn, Germanium, Eisen, Wolfram oder Molybdän enthalten kann. Als Anwendungsgebiet sind Quecksilberdampflampen und Halogenglühlampen beschrieben.

Aufgabe der vorliegenden Erfindung ist es, bei einer gattungsgemäßen Metallhaloghenid-Entladungslampe den UV-Anteil der Strahlung unterhalb 315 nm vollständig zu absorbieren ohne dabei die bei diesem Lampentyp besonders wesentlichen Eigenschaften der guten Farbwiedergabe und hohen Farbtemperatur negativ zu beeinflussen.

Diese Aufgabe wird bei einer gattungsgemäßen Lampe durch die kennzeichnenden Merkmale des Anspruchs 1 gelöst. Besonders vorteilhafte Ausgestaltungen finden sich in den Unteransprüchen.

Die vorliegende Erfindung verwendet eine Cer-Dotierung, die wesentlich höher als vorbekannte Dotierungen ist. Auf diese Weise wird nicht nur eine Abschwächung, sondern auch eine vollständige Absorption der kritischen Emission im UV-Bereich erzielt. Ein besonders überraschender Vorteil ist dabei, daß die Lampeneigenschaften nicht nur nicht verschlechtert, sondern sogar verbessert werden.

Die durch das Cer bedingte Absorption der UV-Strahlung erzeugt bei einer derart hohen Dotierung auch einen merklichen Anteil an Fluoreszenz-Strahlung, die hauptsächlich im blauen Spektralbereich abgegeben wird und dadurch den Blauanteil der von der Lichtquelle direkt abgegebenen Strahlung unterstützt.

Je nach Quarzglassorte und Lampenfüllung - die im übrigen eine konventionelle Füllung unter Einbeziehung von Edelgas und Quecksilber, Cäsium und/oder deren Halogeniden sowie weiteren Metallen, insbesondere Seltenen Erden, wie Dysprosium und/oder Holmium, sein kann - kann der dadurch erzeugte UV-Anteil es vorteilhaft erscheinen lassen, daß neben einer Cer-Verbindung auch eine Titan-Verbindung als Dotierung dem Quarzglas zugesetzt wird. Die Titanverbindung unterstützt das Absorptionsverhalten der Cer-Verbindung im Bereich der besonders schädlichen UV-C-Strahlung.

Geeignete Cer-Verbindungen sind vorteilhaft Oxide (CeO_{2,}Ce₂O₃) sowie Mischoxide des Typs ABOₓ, wobei A = Cer, B = ein oder mehrere von Cer verschiedene Metalle, O = Sauerstoff sind. Insbesondere eignen sich Mischoxide des Typs CeMO₃ (M = Metall). Besonders gut eignet sich als Metall Aluminium.

Geeignete Titan-Verbindungen sind insbesondere Oxide, wie TiO₂.

Eine Dotierung unterhalb von 0,065 Gew.-% reinen Cer-Anteils, z.B. entsprechend einem Anteil von 0,08 Gew.-% CeO₂, Rest SiO₂, wäre - unabhängig von der Wandstärke des Kolbens - zu gering, um eine vollständige Absorption unterhalb 315 nm zu erzielen. Eine Dotierung oberhalb von 0,65 Gew.-% reinen Cer-Anteils (z.B. als 0,8 Gew.-% CeO₂) stößt auf verarbeitungstechnische Schwierigkeiten. Eine besonders günstige Dotierung ist 0,15-0,45 Gew.-% reinen Cer-Anteils, bezogen auf eine Wandstärke von 1 mm. Übliche Wandstärken sind 0,7 bis 5,0 mm, insbesondere 1,0 bis 2,8 mm. Bei dickeren Wandstärken als 1,0 mm kann die Dotierung nach dem bekannten Exponentialgesetz der optischen Weglänge etwas geringer gewählt werden, da die längere Weglänge die geringere Dotierung wieder ausgleicht.

Für einen zusätzlichen Absorptionseffekt im UV-B- und C-Bereich ist die Zugabe einer Titanverbindung mit einem Gewichtsanteil von bis zu 0,05 %, vorzugsweise 0,02-0,03 %, reinen Titans vorteilhaft.

Besonders vorteilhaft ist die Verwendung des dotierten Kolbenglases als Außenkolben, da dabei die Wandbelastung des Kolbenglases erheblich geringer ist, als wenn der Kolben direkt als Entladungsgefäß dient. Bei der Verwendung als Außenkolben kann daher die volle Bandbreite der erfindungsgemäßen Dotierung eingesetzt werden, ohne daß Nachteile zu berücksichtigen wären.

Im Fall der Verwendung als Entladungsgefäß ist es vorteilhaft, die Dotierung eher gering zu wählen, da die thermische Belastbarkeit des Quarzglases mit zunehmender Dotierung abnimmt und u.U. die Lebensdauer der Lampe sonst beeinträchtigt wird.

Die im Einzelfall vorteilhafteste Dotierung richtet sich auch nach dem von der Lampenfüllung emittierten Spektrum. Der Wendepunkt des Transmissionsspektrums des dotierten Kolbenglases (d.h. der Punkt mit 50 %iger Transmission) kann daher grob geschätzt um ca. 20 nm verschoben werden. Als Richtschnur sollen die folgenden Angaben dienen. Bei einem Anteil von 0,25 % reinen Cers liegt er bei etwa 350 nm, bei 0,51 % Cer-Anteil verschiebt er sich nach 360 nm.

Die Erfindung soll im folgenden anhand zweier Ausführungsbeispiele erläutert werden. Es zeigen
- Figur 1: eine erfindungsgemäße einseitig gesockelte Hochdruckentladungslampe, teilweise geschnitten, mit Außenkolben
- Figur 2: eine erfindungsgemäße zweiseitig gesockelte Hochdruckentladungslampe ohne Außenkolben
- Figur 3: einen Ausschnitt aus dem Spektrum einer Lampe gemäß Figur 1

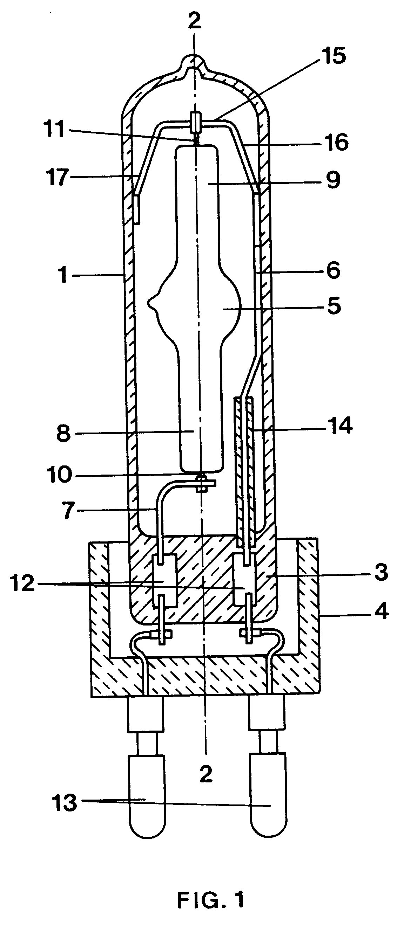

In Figur 1 ist eine einseitig gesockelte 575 W Metallhalogenid-Entladungslampe dargestellt.

Der einseitig gequetschte Außenkolben 1 besitzt eine Längsachse 2 und steckt mit seiner Quetschung 3 im Lampensockel 4. Innerhalb des Außenkolbens 1 aus dotiertem Quarzglas ist ein Entladungsgefäß 5 aus Quarzglas axialsymmetrisch angeordnet, das von einem Gestellbügel 6 und von einem Stützdraht 7 gehaltert wird. Der Gestellbügel 6 und der Stützdraht 7 bilden zusammen das Gestell der Lampe. Das Entladungsgefäß 5 besitzt ein sockelseitiges 8 und ein sockelfernes 9 Ende, aus denen eine sockelseitige 10 bzw. eine sockelferne 11 Stromzuführung herausragen. Beide Stromzuführungen 10, 11 sind über den Stützdraht 7 bzw. den Gestellbügel 6 und über je eine in der Quetschung 3 eingeschmolzene Molybdänfolie 12 elektrisch-leitend mit einem äußeren Kontaktstift 13 verbunden.
Der Gestellbügel 6 weist im Bereich des sockelseitigen Endes 8 des Entladungsgefäßes 5 eine Glasumhüllung 14 auf, die in der Quetschung 3 eingeschmolzen ist und zur Erhöhung der elektrischen Durchschlagsfestigkeit dient. Der Gestellbügel 6 besitzt einen senkrecht zur Längsachse 2 verlaufenden Querbalken 15, der mit der sockelfernen Stromzuführung 11 verschweißt ist. Die Länge dieses Querbalkens 15 ist erheblich kleiner als der Innendurchmesser des Außenkolbens 1. An die symmetrisch bezüglich der Längsachse 2 angeordneten Enden des Querbalkens 15 schließen sich zwei Schrägen 16, 17 an, die jeweils mit Endabschnitten klemmend an der Außenkolbenwandung anliegen.
Bei diesem Ausführungsbeispiel beträgt der Innendurchmesser des Außenkolbens 1 ca. 24 mm und der Querbalken 15 hat eine Länge von ungefähr 16 mm. Die Wandstärke des Außenkolbens 1 beträgt 2 mm.

Der Außenkolben 1 besteht aus dotiertem Quarzglas, das 0,25 Gew.-% Cer-Anteil in Form von 0,31 Gew.-% CeO₂ enthält. Zusätzlich enthält es 0,025 Gew.-% Titan-Anteil in Form von 0,042 Gew.-% TiO₂.

Ein Beispiel einer Füllung für das Entladungsgefäß dieser Lampe ist in der folgenden Tabelle 1 angegeben, wobei auch die lichttechnischen Daten zusammengestellt sind:

**Tabelle 1**

| | Füllung 1 |
|---|---|
| J₂ | 0,36 mg |
| Br₂ | 0,54 mg |
| Cs | 0,27 mg |
| Dy | 0,32 mg |
| Hg | 42 mg |
| Ar | 220 mbar |
| Leistungsaufnahme | 575 W |
| Entladungsgefäßvolumen | 1,80 ml |
| Elektrodenabstand | 7 mm |
| Brennspannung | 95 V |
| Farbtemperatur | 5600 K |
| Lichtausbeute | 83 lm/W |
| Farbwiedergabeindex Ra | 90 |
| Rotwiedergabeindex R₉ | 30 |
| Lebensdauer | 750 h |

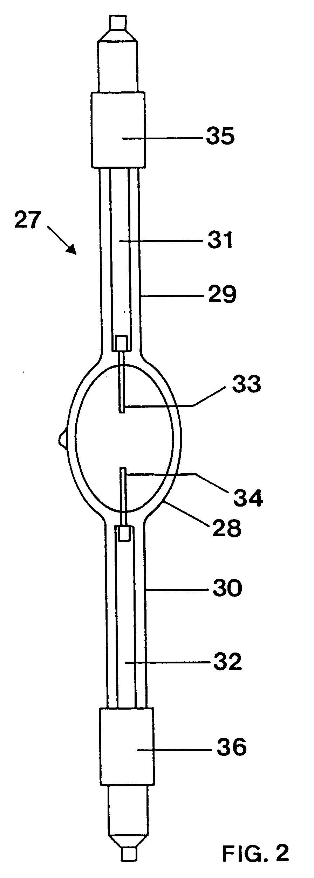

In Figur 2 ist eine erfindungsgemäße Metallhalogenid-Hochdruckentladungslampe 27 mit einer Leistungsaufnahme von 4000 W dargestellt. Die Lampe 27 besteht aus einem ellipsoidförmigen Entladungsgefäß 28 aus dotiertem Quarzglas, an dessen beiden in der Achse liegenden Enden je ein Hals 29, 30 angeschmolzen ist. In die Hälse 29, 30 ist jeweils eine Molybdän-Dichtungsfolie 31, 32 eingeschmolzen, wobei an dem dem Entladungsgefäß zugewandten Ende der Folie 31, 32 eine stiftförmige Elektrode 33, 34 aus Wolfram angeschweißt ist. Die anderen Enden der Dichtungsfolie 31, 32 sind elektrisch mit den Sockeln 35, 36 vom Typ SFa 21-12 verbunden, die über die freien Enden der Hälse 29, 30 gesteckt und mittels Kitt befestigt sind.

Die folgende Tabelle 2 zeigt eine Füllung des Entladungsgefäßes einer 4000 W-Lampe sowie die lichttechnischen Daten der Lampe.

**Tabelle 2**

| | Füllung 2 |
|---|---|
| J₂ | 1,00 mg |
| Br₂ | 1,90 mg |
| Cs | 0,90 mg |
| Dy | 0,65 mg |
| Gd | 0,55 mg |
| Hg | 200 mg |
| Ar | 440 mbar |
| Leistungsaufnahme | 4000 W |
| Entladungsgefäßvolumen | 24,5 ml |
| Elektrodenabstand | 20 mm |
| Brennspannung | 200 V |
| Farbtemperatur | 6000 K |
| Lichtausbeute | 110 lm/W |
| Farbwiedergabeindex Ra | 95 |
| Rotwiedergabeindex R₉ | 80 |
| Lebensdauer | 300 h |

Das Entladungsgefäß 27 besteht aus dotiertem Quarzglas, das mit 0,10 Gew.-% reinem Cer-Anteil, z.B. in Form von 0,13 Gew.-% CeO₂, sowie 0,01 Gew.-% reinem Titan-Anteil, z.B. in Form von 0,017 Gew.-% TiO₂, dotiert ist. Der Rest besteht aus SiO₂.

Die Erfindung ist nicht auf die gezeigten Ausführungsbeispiele beschränkt. Es können auch andere Cer-Verbindungen, insbesondere Mischoxide, verwendet werden. Neben Cer (und evtl. Titan) können auch andere Stoffe dem Quarzglas als Dotierung zugesetzt sein, insbesondere Al₂O₃.

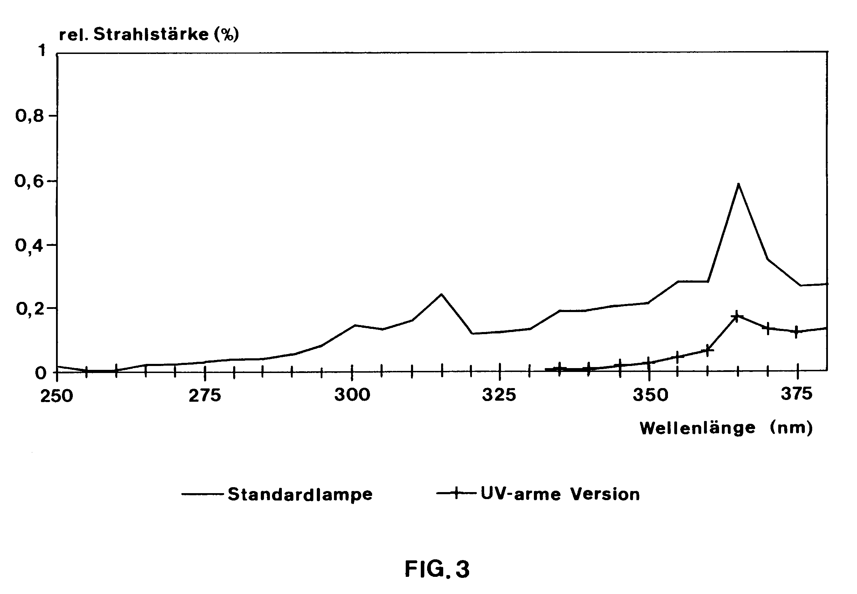

Figur 3 zeigt einen Ausschnitt aus dem Spektrum der Lampe gemäß Figur 1 im Wellenlängenbereich zwischen 250 und 380 nm. Bei Verwendung eines undotierten Außenkolbens (Standardlampe, obere Kurve) ist eine Emission im gesamten Spektralbereich nachweisbar. Durch den Einsatz des dotierten Außenkolbens (UV-arme Version, untere Kurve) wird die Emission auf den UV-A-Bereich begrenzt.

Der Zusatz von Aluminium, insbesondere als Mischoxid CeAlO₃, bringt erhebliche verfahrenstechnische Vorteile mit sich und garantiert eine besonders gute homogene Verteilung der Dotierung im Glas. Zur gezielten Beeinflussung der Viskosität und Entglasungseigenschaften des dotierten Kolbenglases kann eine weitere, u.U. erhebliche Zugabe an Al₂O₃ erfolgen, so daß letztlich das Molverhältnis von im Quarzglas gelösten Cer zu Aluminium zwischen 1:1 und 0,2:1 liegen kann. Bei einem besonders bevorzugten Ausführungsbeispiel, das im übrigen dem in Figur 1 beschriebenen entspricht, ist der Außenkolben aus Quarzglas gefertigt, das unter Zugabe von 0,51 Gew.-% CeAlO₃ und 0,04 Gew.-% TiO₂ hergestellt wurde, so daß das Mol-Verhältnis von im Quarzglas gelösten Ce zu Al 1:1 beträgt. Dies entspricht einem nominalen Anteil von 0,12 % Al₂O₃ und 0,39 % Ce₂O₃. Einzelheiten des Herstellverfahrens sind in der Parallel-Anmeldung Nr. P 42 40 006.6 beschrieben.

## Patentansprüche

1. Metallhalogenid-Entladungslampe mit einem Kolben aus Quarzglas, der als Entladungsgefäß (27) oder als Außenkolben (1) ein Entladungsvolumen umschließt, das zwei hochtemperaturbeständige Elektroden (33,34) sowie eine Füllung enthält, die u.a. Metallhalogenide aufweist, dadurch gekennzeichnet, daß Licht mit einem tageslichtähnlichen Spektrum und einer Farbtemperatur von ca. 5000 bis 6000 K unter Verwendung von Cäsium als Bestandteil der Füllung emittiert wird, wobei eine Farbwiedergabe von Ra ≥ 90 erzielt wird, und daß das Kolbenglas mit einer cer-haltigen Verbindung dotiert ist, wobei der reine Cer-Anteil, bezogen auf das Gesamtgewicht, 0.065 bis 0.65 % beträgt.

2. Metallhalogenid-Entladungslampe nach Anspruch 1, dadurch gekennzeichnet, daß der Cer-Anteil 0,15-0,45 % beträgt, bezogen auf 1 mm Wandstärke des Kolbenglases.

3. Metallhalogenid-Entladungslampe nach Anspruch 1 oder 2, dadurch gekennzeichnet, daß das Kolbenglas zusätzlich mit einer titanhaltigen Verbindung dotiert ist, wobei der reine Titan-Anteil, bezogen auf das Gesamtgewicht, bis zu 0,05 % beträgt.

4. Metallhalogenid-Entladungslampe nach Anspruch 3, dadurch gekennzeichnet, daß der reine Titan-Anteil zwischen 0,02 und 0,03 % beträgt.

5. Metallhalogenid-Entladungslampe nach Anspruch 1, dadurch gekennzeichnet, daß die Cer-Verbindung das drei- oder vierwertige Oxid des Cers oder eine Mischoxidverbindung des Cers ist, die neben Cer ein oder mehrere andere Metalle enthält.

6. Metallhalogenid-Entladungslampe nach Anspruch 3, dadurch gekennzeichnet, daß die Titanverbindung ein Oxid des Titans ist.

7. Metallhalogenid-Entladungslampe nach Anspruch 1, dadurch gekennzeichnet, daß der Kolben eine Wandstärke zwischen 0,7 und 5,0 mm besitzt.

8. Metallhalogenid-Entladungslampe nach Anspruch 1, dadurch gekennzeichnet, daß der Kolben als Außenkolben (1) verwendet ist.

9. Metallhalogenid-Entladungslampe nach Anspruch 5, dadurch gekennzeichnet, daß als zusätzliches Metall Aluminium verwendet wird.

10. Metallhalogenid-Entladungslampe nach Anspruch 1, dadurch gekennzeichnet, daß für die Dotierung auch Aluminium verwendet wird, wobei das Molverhältnis von im Quarzglas gelösten Cer zu Aluminium höchstens 1:1 beträgt (Randwert eingeschlossen).

## Claims

1. Metal halide discharge lamp having a bulb made from silica glass which, as discharge vessel (27) or as outer bulb (1) encloses a discharge volume which contains two electrodes (33, 34), which are heat-stable at high temperatures, and a filling which contains metal halides inter alia, characterized in that light having a spectrum resembling daylight and a colour temperature of approximately 5,000 to 6,000 K in conjunction with the use of cesium as a component of the filling is emitted, a colour rendition of Ra ≥ 90 being achieved, and in that the bulb glass is doped with a cerium-containing compound, the pure cerium proportion being 0.065 to 0.65% referred to the total weight.

2. Metal halide discharge lamp according to Claim 1, characterized in that the cerium proportion is 0.15-0.45% referred to an 1 mm wall thickness of the bulb glass.

3. Metal halide discharge lamp according to Claim 1 or 2, characterized in that the bulb glass is additionally doped with a titanium-containing compound, the pure titanium proportion being up to 0.05% referred to the total weight.

4. Metal halide discharge lamp according to Claim 3, characterized in that the pure titanium proportion is between 0.02 and 0.03%.

5. Metal halide discharge lamp according to Claim 1, characterized in that the cerium compound is the trivalent or tetravalent oxide of cerium or a mixed oxide compound of cerium which contains one or more other metals in addition to cerium.

6. Metal halide discharge lamp according to Claim 3, characterized in that the titanium compound is an oxide of titanium.

7. Metal halide discharge lamp according to Claim 1, characterized in that the bulb has a wall thickness of between 0.7 and 5.0 mm.

8. Metal halide discharge lamp according to Claim 1, characterized in that the bulb is used as outer bulb (1).

9. Metal halide discharge lamp according to Claim 5, characterized in that aluminium is used as additional metal.

10. Metal halide discharge lamp according to Claim 1, characterized in that also aluminium is used for doping, the molar ratio of the cerium dissolved in the silica glass to the aluminium being at most 1:1 (boundary value included).

## Revendications

1. Lampe à décharge aux halogénures métalliques comportant une ampoule en verre de quartz qui entoure comme enceinte (27) de décharge ou comme ampoule (1) extérieure un volume de décharge qui contient deux électrodes (33,34) résistant aux hautes températures ainsi qu'une atmosphère qui comporte entre autres des halogénures métalliques, caractérisée en ce que de la lumière ayant un spectre similaire à celui de la lumière du jour et une température de couleur d'environ 5000 à 6000 K est émise, avec utilisation de césium comme constituant de l'atmosphère, un rendu des couleurs de RA supérieur ou égal à 90 étant atteint, et en ce que le verre de l'ampoule est dopé par un composé à teneur en cérium, la proportion de cérium pur étant de 0,065 à 0,65% rapportée au poids total.

2. Lampe à décharge aux halogénures métalliques suivant la revendication 1, caractérisée en ce que la proportion de cérium est de 0,15 à 0,45 % rapportée à un millimètre d'épaisseur de paroi du verre d'ampoule.

3. Lampe à décharge aux halogénures métalliques suivant la revendication 1 ou 2, caractérisée en ce que le verre de l'ampoule est dopé de plus par un composé à teneur en titane, la proportion en titane pur pouvant aller jusqu'à 0,05% rapportée au poids total.

4. Lampe à décharge aux halogénures métalliques suivant la revendication 3, caractérisée en ce que la proportion en titane pur est comprise entre 0,02 et 0,03%.

5. Lampe à décharge aux halogénures métalliques suivant la revendication 1, caractérisée en ce que le composé de cérium est l'oxyde trivalent ou quadrivalent du cérium ou un composé d'oxyde mixte du cérium, qui contient un autre métal ou plusieurs autres métaux en plus du cérium.

6. Lampe à décharge aux halogénures métalliques suivant la revendication 3, caractérisée en ce que le composé de titane est un oxyde de titane.

7. Lampe à décharge aux halogénures métalliques suivant la revendication 1, caractérisée en ce que l'ampoule a une épaisseur de paroi comprise entre 0,7 et 5,0 millimètre.

8. Lampe à décharge aux halogénures métalliques suivant la revendication 1, caractérisée en ce que l'ampoule est utilisée comme ampoule (1) extérieure.

9. Lampe à décharge aux halogénures métalliques suivant la revendication 5, caractérisée en ce que l'on utilise de l'aluminium comme métal supplémentaire.

10. Lampe à décharge aux halogénures métalliques suivant la revendication 1, caractérisée en ce que l'on utilise pour le dopage aussi de l'aluminium, le rapport molaire du cérium dissout dans le verre de quartz à l'aluminium étant au plus de 1:1 (valeur marginale incluse).
